(19) Europäisches Patentamt / European Patent Office / Office européen des brevets

(11) **EP 3 358 323 B1**

(12) **FASCICULE DE BREVET EUROPEEN**

(45) Date de publication et mention
de la délivrance du brevet:
**10.06.2020 Bulletin 2020/24**

(51) Int Cl.:
***G01N 25/18*** *(2006.01)* ***G01K 17/20*** *(2006.01)*

(21) Numéro de dépôt: **18154611.0**

(22) Date de dépôt: **01.02.2018**

(54) **ESTIMATION DE LA RÉSISTANCE THERMIQUE D'UN BÂTIMENT**

EINSCHÄTZUNG DES WÄRMEWIDERSTANDS EINES GEBÄUDES

ESTIMATION OF THE THERMAL RESISTANCE OF A BUILDING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.02.2017 FR 1750889**

(43) Date de publication de la demande:
**08.08.2018 Bulletin 2018/32**

(73) Titulaire: **Electricité de France**
**75008 Paris (FR)**

(72) Inventeurs:
• **GIRARD, Alexandre**
**92500 RUEIL-MALMAISON (FR)**
• **JICQUEL, Jean-Marc**
**77250 MORET SUR LOING - ORVANNE (FR)**

(74) Mandataire: **Regimbeau**
**20, rue de Chazelles**
**75847 Paris Cedex 17 (FR)**

(56) Documents cités:
**WO-A1-2012/028829 FR-A1- 3 016 037
FR-A1- 3 029 306**

**Description**

DOMAINE TECHNIQUE

L'invention porte sur la gestion énergétique des bâtiments.

L'invention vise plus spécifiquement à améliorer l'estimation de la résistance thermique d'un bâtiment afin d'optimiser la régulation thermique dudit bâtiment.

ETAT DE LA TECHNIQUE

L'ouverture à la concurrence des marchés de l'électricité et du gaz, d'une part, et les prescriptions réglementaires de maîtrise de l'énergie d'autre part, impliquent que les fournisseurs d'énergies soient capables de proposer des solutions fiables de gestion optimisée de la température intérieure d'un bâtiment. Une condition essentielle pour atteindre cette fiabilité est d'être capable de bien estimer la réponse thermique d'un bâtiment vis-à-vis des variations de température extérieure et de l'apport de puissance de chauffage et/ou de climatisation.

Pour obtenir cette réponse thermique, un modèle mathématique simple est de considérer un bâtiment comme l'enchaînement d'un gain scalaire (la résistance thermique du bâtiment appelée GV dans la réglementation thermique) et de deux filtres du premier ordre :

- un premier filtre, avec une constante de temps de l'ordre de quelques heures classiquement, pour représenter l'inertie de la structure du bâtiment, c'est-à-dire le temps qu'il faut à la structure pour réagir à une modification des températures intérieure ou extérieure, et
- un second filtre, avec une constante de temps de l'ordre de quelques dizaines de minutes pour représenter l'inertie de l'air dans le bâtiment, c'est-à-dire le temps qu'il faut à la masse d'air pour réagir à une modification de la puissance de chauffage.

La résistance thermique GV correspond, en fait, à la puissance de chauffage supplémentaire qu'il va falloir fournir pour faire monter la température de l'air dans le bâtiment de 1°C. La relation entre puissance de chauffage $P_{chauf}$ et les températures intérieure $T_{int}$ et extérieure $T_{ext}$ s'écrit donc :

$$P_{chauf} = \max(0, GV(T_{int} - T_{ext}))$$

La détermination des constantes de temps des filtres successifs peut être faite de manière déclarative, en s'appuyant sur le volume du bâtiment et sur la nature et les dimensions des parois. La détermination de la résistance thermique GV peut être aussi faite de manière déclarative, mais il est possible de faire une estimation à partir de mesures effectuées sur le bâtiment.

On connaît ainsi du document FR 3 029 306 un procédé de détermination de grandeurs relatives à l'évolution thermique d'un bâtiment en vue d'optimiser la régulation thermique dudit bâtiment. Le procédé comprend notamment une étape d'acquisition de données observables caractérisant sollicitation thermique et réponse thermique d'un bâtiment au cours de l'étape d'acquisition. De plus le procédé comprend une étape de minimisation d'une fonctionnelle fonction d'un écart entre valeurs mesurées lors de l'étape sus décrite, et valeurs calculées au moyen d'un module de simulation apte à fournir une réponse thermique du bâtiment au cours de l'étape d'acquisition, à partir d'un système d'équations impliquant notamment les grandeurs relatives à l'évolution thermique du bâtiment. Le résultat de cette étape de minimisation fournit les valeurs des grandeurs thermiques relatives du bâtiment. Cependant, ce procédé implique une instrumentation de mesure et un algorithme de minimisation complexes. Ceci n'autorise pas beaucoup de marges de manoeuvre dans l'estimation afin de prendre en compte d'autres facteurs intervenant dans la dynamique thermique du bâtiment.

On connaît à cet égard une méthode simple et connue d'estimation de la résistance thermique GV, qui repose sur l'acquisition par capteurs des mesures suivantes :

- une température extérieure au bâtiment $T_{ext}$,
- une température à l'intérieur du bâtiment $T_{int}$,
- une puissance de chauffage, quelle que soit la source d'énergie $P_{chauf}$, sur au moins une demi-année incluant l'hiver pour bénéficier de la période de chauffe. La puissance de chauffage dans le cas électrique est obtenue à partir de la puissance électrique totale dont elle représente une part très majoritaire. Les mesures sont ensuite représentées dans un diagramme où $P_{chauf}$ figure en ordonnées et ($T_{ext}$ - $T_{int}$) en abscisse. On obtient ainsi un nuage de points au travers duquel on trace une droite, qui passe entre ces points. Enfin, on recherche par moindres carrés le coefficient de proportionnalité reliant la puissance de chauffage à la différence des températures citées, les valeurs étant moyennées sur un jour pour atténuer les effets d'inertie du bâtiment. De là on déduit le coefficient de proportionnalité qui représente la résistance thermique GV.

Cependant, cette méthode, quoique simple à mettre en oeuvre, possède des limites :

- des limites physiques :

  • l'influence de la température extérieure sur la structure est sensée être instantanée à l'échelle de la journée, alors qu'il est connu que la structure possède une inertie de deux à trois jours,
  • la mesure de température intérieure est une température locale qui peut entraîner des biais de représentativité, la température intérieure qui est utile dans la formule étant une valeur moyenne sur l'ensemble du volume d'air qui n'est pas directement mesurable,
  • les bâtiments peuvent comporter des zones de températures intérieures différentes du fait du réglage des consignes de température selon les zones, il faut donc pouvoir prendre en compte différentes mesures de température pour avoir une bonne représentativité du bâtiment global,
  • les bâtiments peuvent avoir deux sources d'énergie, comme l'électricité et le gaz, qui contribuent aux échanges thermiques, il est alors intéressant de pouvoir estimer une résistance thermique GV vis-à-vis de chaque source d'énergie,

- une limite de mesure :

  • la mesure de température est assez souvent quantifiée, c'est-à-dire que l'on n'a pas de variations plus forte qu'une valeur donnée, de 0.1 à 0.3°C selon les systèmes de mesure, ceci entraînant une dispersion supplémentaire par rapport à la droite de moindres carrés dont le coefficient directeur est la résistance thermique GV.

Il existe donc un besoin d'estimation de la résistance thermique du bâtiment au moyen d'un procédé simple et efficace, qui permette d'intégrer des facteurs supplémentaires d'influence sur la dynamique thermique du bâtiment.
Le brevet FR3016037 décrit une procédé et dispositif de détermination du coefficient de déperdition thermique d'un local.
Le document WO2012/028829 décrit un prodédé de détermination du coefficient de déperdition thermique d'un local.

BASE DE L'INVENTION

Par rapport à la dernière méthode précédemment décrite, l'invention vise donc à répondre à deux objectifs :

- réduire l'épaisseur du nuage de points obtenus dans le diagramme reliant la puissance de chauffage à la différence entre température extérieur et intérieur, par la prise en compte de l'inertie thermique du bâtiment,
- apporter une correction sur la mesure brute de la température intérieure qui peut être décalée par rapport à la température intérieure réelle, et ainsi influer sur la pente de la droite dudit diagramme.

Un autre but de l'invention est de permettre d'intégrer des paramètres additionnels, régissant la dynamique thermique du bâtiment, à l'estimation de la résistance thermique du bâtiment.
A cet égard, l'invention propose un procédé d'estimation de la résistance thermique d'un bâtiment comprenant les étapes de :

a) mesurer une température intérieure du bâtiment au moyen d'un capteur configuré pour mesurer une température intérieure du bâtiment,
b) mesurer une température extérieure au bâtiment au moyen d'un capteur configuré pour mesurer une température extérieure au bâtiment,
c) mesurer une puissance de chauffage du bâtiment au moyen d'un capteur configuré pour mesurer une puissance de chauffage du bâtiment,
d) répéter les étapes a), b) et c) à un pas de temps P sur un intervalle de temps total T,
e) synchroniser les mesures des étapes a), b) et c) au même pas de temps de sorte à obtenir un ensemble de N triplets (N étant égale à T divisé par P) de valeurs de température intérieures du bâtiment, de température extérieure au bâtiment et de puissance de chauffage du bâtiment à tous les temps de mesure des étapes a), b) et c),
f) estimer la résistance thermique du bâtiment,

l'étape f) comprenant une étape de minimisation d'une fonctionnelle sous contrainte de la relation physique entre la puissance de chauffage, la température extérieure et la température intérieure du bâtiment, relativement à la résistance thermique du bâtiment, caractérisé en ce que la minimisation de la fonctionnelle se fait également relativement à une estimation de la température intérieure du bâtiment et à X scalaires constituant les paramètres d'un filtre d'ordre X à gain unitaire de la température extérieure au bâtiment, et en ce qu'il comprend de plus une étape g) de fourniture de données relatives à la valeur de la résistance thermique du bâtiment estimée au cours de l'étape f).

Avantageusement, mais facultativement, le procédé selon l'invention peut en outre comprendre l'une des caractéristiques suivantes :

- la minimisation de la fonctionnelle se fait également relativement à un biais de représentativité de la température intérieure du bâtiment,
- l'étape a) est effectuée simultanément dans M zones différentes du bâtiment, M étant strictement supérieur à 1, l'étape e) permettant ainsi d'obtenir un ensemble de N M+2-uplets de valeurs de température intérieures du bâtiment, de température extérieure au bâtiment et de puissance de chauffage du bâtiment à tous les temps de mesure des étapes a), b) et c), et la minimisation de la fonctionnelle se fait également sous contrainte d'une moyenne des M températures intérieures respectives des M dites zones différentes du bâtiment, mesurées au cours de l'étape a), et relativement à M coefficients relatifs aux M températures intérieures mesurées au cours de l'étape a) dans le calcul de la moyenne,
- l'étape c) comprend de plus une étape consistant à mesurer une seconde puissance de chauffage du bâtiment, et la minimisation de la fonctionnelle se fait également sous contrainte de la relation physique entre la seconde puissance de chauffage, la température extérieure et la température intérieure du bâtiment, et relativement à une seconde résistance thermique du bâtiment ainsi qu'à un différentiel de température,
- l'étape c) comprend de plus une étape consistant à mesurer au moins une autre puissance de chauffage du bâtiment, et la minimisation de la fonctionnelle se fait également sous contrainte de la relation physique entre la somme de différentes puissances de chauffage, la température extérieure et la température intérieure du bâtiment,
- l'étape de minimisation de la fonctionnelle est effectuée par l'exécution d'un code source dans un environnement informatique de langage interprétable ou au moyen d'un exécutable informatique indépendant,
- l'étape g) est effectuée au moyen d'une interface de communication avec un utilisateur,
- le pas de temps de l'étape d) est compris entre 0 et 3 jours,
- la durée totale de l'étape d) est supérieure ou égale à 6 mois, et l'étape d) comprend au moins une période de chauffage du bâtiment,
- le pas de temps P de l'étape d) est compris entre 0 et 3 minutes, et
- la durée totale T de l'étape d) est de l'ordre d'une heure.

L'invention porte également sur un système de détermination de la résistance thermique d'un bâtiment comprenant :

- des moyens de mesure d'une température intérieure du bâtiment,
- des moyens de mesure d'une température extérieure au bâtiment,
- des moyens de mesure d'une puissance de chauffage du bâtiment,
- des moyens de synchronisation des mesures acquises,
- des moyens pour estimer la résistance thermique du bâtiment à partir des mesures acquises, et

les moyens pour estimer la résistance thermique du bâtiment comprenant des moyens pour minimiser une fonctionnelle sous contrainte de la relation physique entre la puissance de chauffage, la température extérieure et la température intérieure du bâtiment, relativement à la résistance thermique du bâtiment, le système étant caractérisé en ce que la minimisation de la fonctionnelle se fait également relativement à une estimation de la température intérieure du bâtiment et à X scalaires constituant les paramètres d'un filtre d'ordre X à gain unitaire de la température extérieure au bâtiment, et en ce qu'il comprend des moyens pour fournir des données relatives à la valeur de la résistance thermique estimée.

Enfin l'invention porte sur une utilisation du procédé d'estimation de la résistance thermique d'un bâtiment selon l'invention pour réguler la température intérieure d'un bâtiment au moyen d'un module de régulation de température.

Le procédé selon l'invention est donc plus simple que les procédés de l'art antérieur puisqu'il met en oeuvre des minimisations d'une seule équation. Cette simplification permet d'intégrer des paramètres additionnels comme différentes sources de chauffages ou des bâtiments multizones.

De plus le procédé selon l'invention est plus précis que les procédés de l'art antérieur en prenant en compte l'inertie thermique du bâtiment par rapport à la température extérieure.

DESCRIPTIF RAPIDE DE LA FIGURE

D'autres caractéristiques, buts et avantages de la présente invention apparaitront à la lecture de la description détaillée qui va suivre et en regard du dessin annexé donné à titre d'exemple non limitatif et sur lequel :

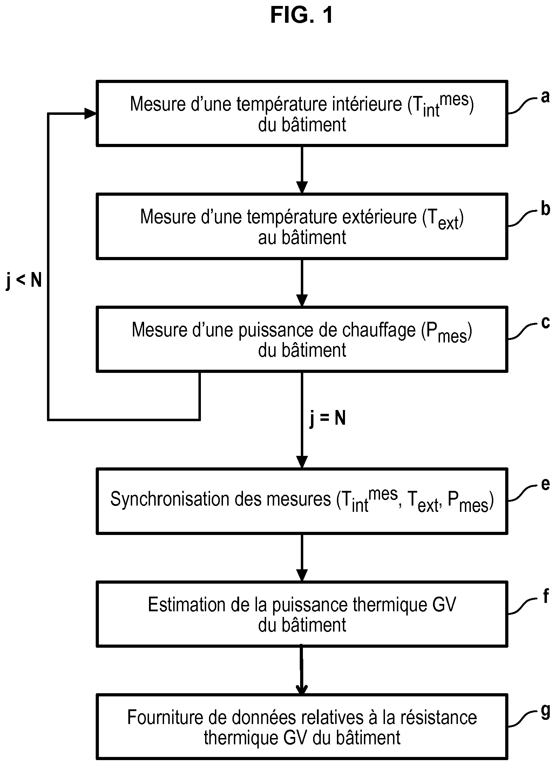

- La figure 1 représente un diagramme fonctionnel des étapes du procédé selon l'invention.

DESCRIPTION DETAILLEE DE L'INVENTION

Le procédé selon l'invention vise à estimer la résistance thermique GV d'un bâtiment à partir d'au moins trois données mesurées à l'aide de capteurs configurés à cet effet :

- une température extérieure $T_{ext}$ au bâtiment,
- une température intérieure $T_{int}$ au bâtiment,
- une puissance de chauffage $P_{chauf}$ du bâtiment, quelle que soit la source d'énergie,

La résistance thermique GV correspond à la puissance de chauffage supplémentaire qu'il va falloir fournir pour faire monter la température de l'air dans le bâtiment de 1°C. De plus, dans tout ce qui suit, le terme « mesure de température intérieure » peut correspondre soit à une mesure réelle, soit à une valeur de consigne supposée récupérable, et le terme « capteur » aux appareils de relevé correspondants.

On rappelle enfin que la relation entre puissance de chauffage $P_{chauf}$ et les températures intérieure $T_{int}$ et extérieure $T_{ext}$ d'un bâtiment s'écrit :

$$P_{chauf} = \max(0, GV(T_{int} - T_{ext}))$$

Le procédé selon l'invention met en œuvre trois étapes principales : la collecte de données mesurables (a, b, c), puis l'estimation de la résistance thermique GV à partir des données collectées (f), et enfin la fourniture (g) de données relatives à la résistance thermique estimée. Le procédé selon l'invention va maintenant être décrit en détaillant chacune de ces étapes.

Collecte des données mesurées

Le bâtiment dont on cherche à estimer la résistance thermique GV est muni de capteurs configurés pour fournir une mesure de température intérieure et une mesure de puissance de chauffage. Avantageusement, le bâtiment est muni de capteurs configurés pour fournir une mesure de température extérieure au bâtiment. Dans un autre mode de réalisation, une mesure de température extérieure peut être fournie par Météo France.

En référence à la figure 1, Le procédé selon l'invention met alors en œuvre les étapes suivantes sur une durée totale T:

- enregistrement (a) de données de température intérieure à un pas de temps P,
- enregistrement (b) de données de température extérieure au même pas de temps P,
- enregistrement (c) de données de puissance de chauffage au même pas de temps P,
- répétition des étapes (a, b, c) tant que le temps (j) de mesure est plus petit que N (N étant égale à T divisé par P),
- synchronisation (e) des mesures des étapes (a, b, c) au même pas de temps de sorte à obtenir un ensemble de N triplets de valeurs de température intérieures du bâtiment, de température extérieure au bâtiment et de puissance de chauffage du bâtiment à tous les temps (j) de mesure des étapes (a, b, c) par interpolation linéaire, et
- application de la méthode d'estimation de la résistance thermique GV (f),

    ◦ soit par l'exécution d'un code source dans un environnement informatique de langage interprétable de type Matlab ou Python,
    ◦ soit par exécutable informatique indépendant, application des résultats pour le réglage de la régulation selon les méthodes présentées ci- dessous.

Avantageusement, le pas de temps P est compris entre 0 et 3 heures. De plus, l'enregistrement des données se fait sur une durée totale T de 6 mois minimum incluant une période de chauffage.

Avantageusement la puissance de chauffage est une puissance électrique. Dans un autre mode de réalisation, la puissance de chauffage peut également venir d'autres sources d'énergie.

On va maintenant décrire plus en détail la méthode d'estimation de la résistance thermique GV.

Estimation de la résistance thermique GV à partir des données collectées

Afin de répondre aux deux objectifs exposés dans la partie intitulée « Base de l'invention », le procédé selon l'invention s'appuie sur des principes de type assimilation de données en cherchant le minimum d'une fonctionnelle (ou fonction-coût) J obtenue en utilisant les données collectées au pas de temps P.

Le problème est double, et la fonctionnelle va être minimisée relativement à deux paramètres principaux.

En effet, il faut tout d'abord considérer explicitement que les mesures de la puissance et des températures sont affectées d'incertitudes sur la mesure. De plus, la relation linéaire entre la puissance de chauffage et la différence des températures intérieure et extérieure s'appuie sur une valeur de température extérieure instantanée. Or la structure du bâtiment induit une inertie qui fait que la température extérieure perçue à l'intérieur du bâtiment n'est pas la valeur instantanée.

Pour répondre à ces deux aspects du même problème, la méthode d'estimation selon l'invention propose d'une part de corriger les mesures collectées en s'appuyant sur la relation linéaire entre la puissance de chauffage et la différence des températures intérieure et extérieure, via la résistance thermique GV à estimer. D'autre part, en vue d'intégrer le phénomène d'inertie, la méthode selon l'invention se propose de déterminer les paramètres d'un filtre d'ordre X discret de gain unitaire à un pas journalier. En termes mathématiques, cela signifie que l'on va rechercher X coefficients $(a_i)_{i=1...N}$ positifs tels que $\sum_{i=1}^{X} a_i < 1$ qui vont fournir une valeur filtrée de la température extérieure $T_{ext}^f$ selon la relation de récurrence suivante, pour un indice j d'une séquence de données collectées au pas de temps P :

$$T_{ext}^f(j) = \left(1 - \sum_{i=1}^{X} a_i\right) T_{ext}(j) + \sum_{i=1}^{X} a_i T_{ext}^f(j-i)$$

Avantageusement, dans le mode de réalisation privilégié de l'invention, un filtre du second ordre satisfait un compromis entre le nombre de paramètres à optimiser et la qualité des résultats obtenus.

La méthode selon l'invention va donc consister en la recherche du minimum d'une fonctionnelle J ci-dessous, obtenue en utilisant les données collectées, sous contrainte de la relation physique entre la puissance de chauffage, la température extérieure et la température intérieure, relativement à la résistance thermique GV, à une estimation $T_{int}^{est}$ de la température intérieure du bâtiment et aux X scalaires $(a_i)_{i=1...x}$ constituant les paramètres du filtre d'ordre X discret de gain unitaire à un pas journalier de la température extérieure $T_{ext}$ au bâtiment. La fonctionnelle J réalise ainsi le compromis entre :

-   avoir une estimation de la puissance de chauffage $P_{calc}$ proche de celle mesurée $P_{mes}$,
-   avoir une estimation de la température intérieure $T_{int}^{est}$ proche de celle mesurée $T_{int}^{mes}$,
-   tout en satisfaisant la relation liant la puissance à l'écart des températures intérieure $T_{int}^{est}(j)$ et extérieure filtrée $T_{ext}^f$ avec un filtre d'ordre X discret de gain unitaire à un pas journalier.

$$J\left(GV, T_{int}^{est}, (a_i)_{i=1...N}\right)$$
$$= \frac{1}{\sigma_p^2} \sum_{j=0}^{N} \left(P_{mes}(j) - P_{calc}(j)\right)^2$$
$$+ \frac{1}{\sigma_T^2} \sum_{j=0}^{N} \left(T_{int}^{est}(j) - T_{int}^{mes}(j)\right)^2 + \lambda_{GV} \min(GV, 0)^2$$
$$+ \lambda_{a1} \sum_{i=1}^{X} min(a_i, 0)^2 + \lambda_{a2} max\left(\sum_{i=1}^{X} a_i - 1,0\right)^2$$

$$P_{calc}(j) = \max(0, GV(T_{int}^{est}(j) - T_{ext}^{f}(j)))$$

$$T_{ext}^{f}(j) = \left(1 - \sum_{i=1}^{X} a_i\right) T_{ext}(j) + \sum_{i=1}^{X} a_i T_{ext}^{f}(j-i)$$

Cette fonctionnelle J intègre de plus le fait que la résistance thermique GV doit être positive, et que les coefficients $(a_i)_{i=1\dots X}$ doivent être positifs et leur somme soit inférieure à 1. Les coefficients $\sigma_p^2$, $\sigma_T^2$, $\lambda_{GV}$, $\lambda_{a1}$, et $\lambda_{a2}$ sont déterminés empiriquement de façon à avoir un compromis satisfaisant sur l'écart mesure-estimation entre puissance et température.

A la suite de cette minimisation, on obtient la résistance thermique GV du bâtiment et les différents coefficients $(a_i)_{i=1\dots X}$.

Perfectionnements de l'estimation de la résistance thermique GV à partir des données collectées

Trois perfectionnements de la méthode d'estimation selon l'invention précédemment décrite vont maintenant être détaillés. Bien que présentées de manière indépendantes les unes des autres, à partir de la méthode initiale, l'homme du métier comprend que toute combinaison de ces perfectionnements est envisageable.

*Détermination d'un biais de représentativité sur la température intérieure*

Une limite physique indiquée précédemment décrit que la mesure de température intérieure $T_{int}$ est une mesure locale alors que la température utilisée dans le calcul de la résistance thermique GV est une valeur moyenne sur tout le bâtiment. Il existe donc une possibilité de biais de représentativité qu'il est utile d'estimer.

Pour cela, selon un mode de réalisation du procédé de l'invention, une séquence de données collectées comporte des périodes de non-chauffage. Ainsi, le procédé selon l'invention permet, au cours de l'étape f), de déterminer le biais de représentativité $\delta T_{int}$.

Le procédé selon l'invention utilise le fait que la température intérieure $T_{int}$ varie dans un intervalle assez faible en comparaison de la plage d'évolution de la température extérieure $T_{ext}$ : sur des valeurs moyennées sur une journée, cela permet de calculer une relation affine entre la température extérieure $T_{ext}$ et la puissance de chauffage $P_{chauf}$ valable jusqu'à une certaine valeur de température extérieure maximale, nommée $T_{seuil}$, au-delà de laquelle soit on ne chauffe plus, soit on climatise. C'est cette rupture de comportement qui permet de déterminer $T_{seuil}$.

La puissance de chauffage $P_{chauf}$ doit donc être nulle en moyenne pour des valeurs de température intérieure $T_{int}$ proches de la température $T_{seuil}$. Si ce n'est pas le cas, c'est qu'il existe un biais $\delta T_{int}$.

Un perfectionnement de la méthode d'estimation selon l'invention consiste donc dans la modification de la fonctionnelle J à minimiser selon la formule suivante, où J est minimisée relativement au biais de représentativité $\delta T_{int}$ de la température intérieure dudit bâtiment :

$$J\left(GV, \delta T_{int}, T_{int}^{est}, (a_i)_{i=1\dots N}\right)$$

$$= \frac{1}{\sigma_p^2} \sum_{j=0}^{N} \left(P_{mes}(j) - P_{calc}(j)\right)^2$$

$$+ \frac{1}{\sigma_T^2} \sum_{j=0}^{N} \left(T_{int}^{est}(j) - T_{int}^{mes}(j)\right)^2 + \lambda_{GV} \min(GV, 0)^2$$

$$+ \lambda_{a1} \sum_{i=1}^{X} min(a_i, 0)^2 + \lambda_{a2} max\left(\sum_{i=1}^{X} a_i - 1, 0\right)^2$$

$$P_{calc}(j) = \max(0, GV\left(T_{int}^{est}(j) - \delta T_{int} - T_{ext}^{f}(j)\right))$$

$$T_{ext}^{f}(j) = \left(1 - \sum_{i=1}^{X} a_i\right) T_{ext}(j) + \sum_{i=1}^{X} a_i T_{ext}^{f}(j-i)$$

*Cas d'un bâtiment multizones*

Une autre limite physique indiquée précédemment décrit que la température utilisée dans le calcul de la résistance thermique GV est une valeur moyenne sur tout le bâtiment, tandis que ledit bâtiment peut comprendre plusieurs zones avec des températures différentes. Une solution déclarative pour traiter ce cas est de mesurer les volumes de chaque espace et de faire une moyenne pondérée par les volumes sur les températures différentes. La solution alternative proposée dans la méthode selon l'invention est de déterminer directement, lors de l'identification de la résistance thermique GV, les proportions associées aux mesures de températures différentes pour déterminer la température intérieure $T_{int}$.

Dans un autre mode de réalisation du procédé selon l'invention, l'étape a) est donc effectuée simultanément dans M zones différentes du bâtiment, M étant strictement supérieur à 1. Une information importante pour limiter les combinaisons possibles est de disposer de périodes de non-chauffage pour pouvoir déterminer la température extérieure à partir de laquelle on ne chauffe plus. Toute combinaison de températures intérieures doit alors satisfaire cette valeur de fin de chauffage au moment où la température extérieure atteint ce seuil. Ainsi, s'il existe M zones, la température intérieure moyenne $T_{int}^{moy}$ va être donnée par :

$$T_{int}^{moy} = \sum_{i=1}^{M} v_i T_{int}^{i}$$

$$\sum_{i=1}^{M} v_i = 1$$

Dans ce mode de réalisation, l'étape e) permet ainsi d'obtenir un ensemble de N M+2-uplets de valeurs de température intérieures du bâtiment, de température extérieure au bâtiment et de puissance de chauffage du bâtiment à tous les temps (j) de mesure des étapes a), b) et c). L'estimation de la résistance thermique GV du bâtiment s'effectue donc en même temps que la détermination des coefficients $(v_i)_{i=1...M}$ relatifs aux M températures intérieures mesurées au cours de l'étape a) dans le calcul de la moyenne $T_{int}^{moy}$. La fonctionnelle J à minimiser prend alors la forme suivante, en réalisant le compromis entre :

- avoir une estimation de la puissance de chauffage $P_{calc}$ proche de celle mesurée $P_{mes}$,
- avoir une estimation de la température intérieure $T_{int}^{est}$ proche de celle mesurée $T_{int}^{mes}$,
- tout en satisfaisant la relation liant la puissance à l'écart des températures intérieure $T_{int}^{est}(j)$ et extérieure filtrée $T_{ext}^{f}$ avec un filtre d'ordre X discret de gain unitaire à un pas journalier.

$$J\left(GV, (v_i)_{i=1\ldots M}, T_{int}^{est}, (a_i)_{i=1\ldots N}\right)$$

$$= \frac{1}{\sigma_p^2}\sum_{j=0}^{N}\left(P_{mes}(j) - P_{calc}(j)\right)^2$$

$$+ \frac{1}{\sigma_T^2}\sum_{j=0}^{N}\left(T_{int}^{est}(j) - T_{int}^{moy}(j)\right)^2 + \lambda_{GV}\min(GV,0)^2$$

$$+ \lambda_{a1}\sum_{i=1}^{X}min(a_i,0)^2 + \lambda_{a2}max\left(\sum_{i=1}^{X}a_i - 1,0\right)^2$$

$$+ \lambda_{v1}\sum_{i=1}^{M}min(v_i,0)^2 + \lambda_{v2}\left(\sum_{i=1}^{M}v_i - 1\right)^2$$

$$P_{calc}(j) = \max(0, GV\left(T_{int}^{est}(j) - T_{ext}^{f}(j)\right))$$

$$T_{ext}^{f}(j) = \left(1 - \sum_{i=1}^{X}a_i\right)T_{ext}(j) + \sum_{i=1}^{X}a_i T_{ext}^{f}(j - i)$$

$$T_{int}^{moy}(j) = \sum_{i=1}^{M}v_i T_{int}^{mes}(j)$$

Cette fonctionnelle J intègre de plus le fait que les coefficients $(v_i)_{i=1\ldots M}$ doivent être positifs et leur somme soit égale à 1. Les coefficients $\lambda_{v1}$ et $\lambda_{v2}$ sont déterminés empiriquement.

*Cas multi-énergies*

Il est également possible de prendre en compte le cas où le bâtiment est chauffé à partir de plusieurs énergies (électricité et fioul/gaz par exemple).

Une première démarche directe serait d'utiliser une relation exploitant une résistance thermique GV équivalente traduisant la puissance globale $\Sigma_{sources\ d'énergie}\ P_{chauf}$ = max(0, $GV(T_{int} - T_{ext})$). Cela suppose d'exprimer les consommations des différentes sources d'énergie dans la même unité de puissance. Or les consommations des énergies fossiles en particulier sont souvent exprimées en unités de volume ou de débit volumique, ce qui entraîne qu'il faut imposer une valeur de conversion de débit volumique en puissance. Cette méthode d'estimation selon l'invention est donc utilisable dans un mode de réalisation où les chroniques temporelles sont corrélées. De plus, dans ce mode de réalisation, l'étape c) comprend une étape consistant à mesurer au moins une autre puissance de chauffage du bâtiment.

Si les chroniques temporelles sont suffisamment décorrélées, une autre approche est d'estimer directement une résistance thermique GV pour chaque source d'énergie. Dans cet autre mode de réalisation, la puissance de la source d'énergie 1 est reliée à l'écart entre température intérieure et température extérieure par la relation suivante :

$$P_{chauf}^{1} = \max(0, GV_1(T_{int} - T_{ext}))$$

alors que la puissance de la source d'énergie 2 est exprimée par :

$$P_{chauf}^{2} = \max\left(0, GV_1(T_{int} - \delta T - T_{ext})\right) + P_0^2$$

avec $\delta T$ non nul. Cette formulation permet de prendre en compte une portion de puissance de la source d'énergie 2 qui n'est pas convertie en chauffage. Pour que les données soient décorrélées, il faut que le passage par une puissance minimale soit effectif pour au moins une des deux sources d'énergie.

Dans ce mode de réalisation, l'étape c) comprend ainsi une étape consistant à mesurer une seconde puissance $P_{mes}^2$ de chauffage du bâtiment. La minimisation de J se fait donc également sous contrainte de la relation physique entre la seconde puissance de chauffage, la température extérieure $T_{ext}$ et la température intérieure $T_{int}$, et relativement à une seconde résistance thermique $GV_2$ ainsi qu'à un différentiel de température $\delta T^{est}$. La fonctionnelle J réalise ainsi le compromis entre :

- avoir des estimations des puissances de chauffage $P_{calc}^1$ et $P_{calc}^2$ proches de celles mesurées $P_{mes}^1$ et $P_{mes}^2$ respectivement,

- avoir une estimation de la température intérieure $T_{int}^{est}$ proche de celle mesurée $T_{int}^{mes}$,

- tout en satisfaisant la relation liant la puissance à l'écart des températures intérieure $T_{int}^{est}$ et extérieure filtrée $T_{ext}^f$ avec un filtre d'ordre X discret de gain unitaire à un pas journalier.

$$J\left(GV_1, GV_2, T_{int}^{est}, \delta T^{est}, P_0^{2,est}, (a_i)_{i=1\ldots N}\right)$$

$$= \frac{1}{\sigma_p^2} \sum_{j=0}^{N} \left(P_{mes}^1(j) - P_{calc}^1(j)\right)^2$$

$$+ \frac{1}{\sigma_p^2} \sum_{j=0}^{N} \left(P_{mes}^2(j) - P_{calc}^2(j)\right)^2$$

$$+ \frac{1}{\sigma_T^2} \sum_{j=0}^{N} \left(T_{int}^{est}(j) - T_{int}^{mes}(j)\right)^2 + \lambda_{GV} \min(GV_1, 0)^2$$

$$+ \lambda_{GV} \min(GV_2, 0)^2 + \lambda_{a1} \sum_{i=1}^{X} min(a_i, 0)^2$$

$$+ \lambda_{a2} max \left(\sum_{i=1}^{X} a_i - 1,0\right)^2$$

$$P_{calc}^1(j) = \max(0, GV_1\left(T_{int}^{est}(j) - T_{ext}^f(j)\right))$$

$$P_{calc}^2(j) = \max(0, GV_2\left(T_{int}^{est}(j) - \delta T^{est} - T_{ext}^f(j)\right)) + P_0^{2,est}$$

$$T_{ext}^f(j) = \left(1 - \sum_{i=1}^{X} a_i\right) T_{ext}(j) + \sum_{i=1}^{X} a_i T_{ext}^f(j-i)$$

Fourniture de données relatives à la résistance thermique estimée (GV)

L'étape de minimisation de la fonctionnelle J selon l'une des formes correspondant aux modes de réalisation décrits précédemment aboutit entre autre à une valeur de la résistance thermique GV qui minimise la fonctionnelle J, sous les contraintes également décrites précédemment.

Cette valeur correspond aux données collectées sur la durée totale T. Cette valeur peut être stockée ou directement fournie à un utilisateur. Si elle est stockée, elle peut alors être inscrite dans un fichier qui rassemble toutes les valeurs estimées à chaque fois que la collecte de données et l'estimation de la résistance thermique GV sont mises en oeuvre. Les valeurs de résistance thermique GV stockées peuvent alors subir divers traitements, comme par exemple la réalisation d'une moyenne sur l'ensemble de valeurs stockées, ou un lissage temporel.

En tout état de cause, le procédé selon l'invention comprend une dernière étape de fourniture de données relatives à la résistance thermique GV estimée au cours des étapes précédentes. Ces données peuvent alors être récupérées par un utilisateur au moyen d'une interface de communication.

L'invention porte également sur un système configuré pour mettre en oeuvre le procédé précédemment décrit, selon l'un quelconque des modes de réalisation évoqués. Le système comprend avantageusement des moyens pour collecter les données liées à une température intérieure, une température extérieure et une puissance de chauffage du bâtiment à un pas de temps P sur une durée totale T, des moyens de synchronisation de ces données collectées, des moyens d'estimation de la résistance thermique GV du bâtiment à partir des données collectées selon les méthodes précédemment décrites, et des moyens de fournitures de données relatives à la résistance thermique GV estimée.

Cette représentation simple de la thermique du bâtiment néglige l'impact du rayonnement solaire ainsi que des apports internes (présence/absence d'occupants). Une façon de prendre en compte ces effets et d'appliquer le procédé selon l'invention, en distinguant les plages horaires. Pour ne pas être perturbé par les effets d'inertie, il est possible de descendre jusqu'à une estimation de la résistance thermique GV par heure. Dans ce cas, la durée totale de collecte T est de l'ordre d'une heure, c'est-à-dire inférieure ou égale à une dizaine d'heures, le pas de temps P est alors compris entre 0 et 3 minutes, mais le filtre d'ordre X discret de gain unitaire à un pas journalier de la température extérieure $T_{ext}$ au bâtiment est maintenu tel quel.

A partir de l'estimation de la résistance thermique GV du bâtiment, il est possible de contrôler la température d'un bâtiment. Pour cela, il existe divers modules commerciaux de régulation de température. Les plus simples sont de type régulateur proportionnel-intégral par exemple : ce régulateur utilise une combinaison linéaire de l'écart consigne de température - température intérieure et de l'intégrale de cet écart, les coefficients associés (dits coefficients de la régulation) étant calculés à partir des paramètres du modèle dynamique qui aura été déterminé, dont le coefficient de résistance thermique GV.

Une procédure de calcul habituelle est la méthode de Ziegler-Nichols qui donne ces coefficients de la régulation en fonction des paramètres du modèle.

Un autre type de module de régulation avancé s'appuie sur des méthodes de type commande interne ou commande prédictive qui exploitent directement ce type de modèle.

## Revendications

1. Procédé de détermination de la résistance thermique (GV) d'un bâtiment comprenant les étapes de :

   a) mesurer une température intérieure $\left(T_{int}^{mes}\right)$ du bâtiment au moyen d'un capteur configuré pour mesurer une température intérieure $\left(T_{int}^{mes}\right)$ du bâtiment,

   b) mesurer une température extérieure ($T_{ext}$) au bâtiment au moyen d'un capteur configuré pour mesurer une température extérieure ($T_{ext}$) au bâtiment,

   c) mesurer une puissance de chauffage ($P_{mes}$) du bâtiment au moyen d'un capteur configuré pour mesurer une puissance de chauffage ($P_{mes}$) du bâtiment,

   d) répéter les étapes a), b) et c) à un pas de temps (P) sur un intervalle de temps total (T),

   e) synchroniser les mesures des étapes a), b) et c) au même pas de temps de sorte à obtenir un ensemble $\left(T_{int}^{mes}(j), T_{ext}(j), P_{mes}(j)\right)_{j=0...N}$ de N triplets (N étant égale à T divisé par P) de valeurs de température intérieures du bâtiment, de température extérieure au bâtiment et de puissance de chauffage du bâtiment à tous les temps (j) de mesure des étapes a), b) et c),

   f) estimer la résistance thermique (GV) du bâtiment,

   l'étape f) comprenant une étape de minimisation d'une fonctionnelle (J) sous contrainte de la relation physique entre la puissance de chauffage, la température extérieure et la température intérieure du bâtiment, relativement à la résistance thermique (GV) du bâtiment, **caractérisé en ce que** la minimisation de la fonctionnelle (J) se fait également relativement à une estimation $\left(T_{int}^{est}\right)$ de la température intérieure du bâtiment et à X scalaires $(a_i)_{i=1...X}$ constituant les paramètres d'un filtre d'ordre X à gain unitaire de la température extérieure ($T_{ext}$) au bâtiment, et **en ce qu'**il comprend de plus une étape g) de fourniture de données relatives à la valeur de la résistance thermique (GV) du bâtiment estimée au cours de l'étape f).

2. Procédé selon la revendication 1, dans lequel la minimisation de la fonctionnelle (J) se fait également relativement à un biais de représentativité $\delta T_{int}$ de la température intérieure du bâtiment.

3. Procédé selon l'une des revendications précédentes, dans lequel l'étape a) est effectuée simultanément dans M zones différentes du bâtiment, M étant strictement supérieur à 1, l'étape e) permettant ainsi d'obtenir un ensemble de N M+2-uplets de valeurs de température intérieures du bâtiment, de température extérieure au bâtiment et de puissance de chauffage du bâtiment à tous les temps (j) de mesure des étapes a), b) et c), et dans lequel la minimisation de la fonctionnelle (J) se fait également sous contrainte d'une moyenne $\left(T_{int}^{moy}\right)$ des M températures intérieures respectives des M dites zones différentes du bâtiment, mesurées au cours de l'étape a), et relativement à M coefficients $(v_i)_{i=1...M}$ relatifs aux M températures intérieures mesurées au cours de l'étape a) dans le calcul de la moyenne $\left(T_{int}^{moy}\right)$.

4. Procédé selon l'une des revendications précédentes, dans lequel l'étape c) comprend de plus une étape consistant à mesurer une seconde puissance $\left(P_{mes}^2\right)$ de chauffage du bâtiment, et dans lequel la minimisation de la fonctionnelle (J) se fait également sous contrainte de la relation physique entre la seconde puissance de chauffage, la température extérieure et la température intérieure du bâtiment, et relativement à une seconde résistance thermique (GV₂) du bâtiment ainsi qu'à un différentiel de température $(\delta T^{est})$.

5. Procédé selon l'une des revendications 1 à 3, dans lequel l'étape c) comprend de plus une étape consistant à mesurer au moins une autre puissance de chauffage du bâtiment, et dans lequel la minimisation de la fonctionnelle (J) se fait également sous contrainte de la relation physique entre la somme de différentes puissances de chauffage, la température extérieure et la température intérieure du bâtiment.

6. Procédé selon l'une des revendications précédentes, dans lequel l'étape de minimisation de la fonctionnelle (J) est effectuée par l'exécution d'un code source dans un environnement informatique de langage interprétable ou au moyen d'un exécutable informatique indépendant.

7. Procédé selon l'une des revendications précédentes, dans lequel l'étape g) est effectuée au moyen d'une interface de communication avec un utilisateur.

8. Procédé selon l'une des revendications précédentes, dans lequel le pas de temps P de l'étape d) est compris entre 0 et 3 jours.

9. Procédé selon l'une de revendications précédentes, dans lequel la durée totale T de l'étape d) est supérieure ou égale à 6 mois, et dans lequel l'étape d) comprend au moins une période de chauffage du bâtiment.

10. Procédé selon l'une des revendications précédentes, dans lequel le pas de temps P de l'étape d) est compris entre 0 et 3 minutes.

11. Procédé selon l'une des revendications précédentes, dans lequel la durée totale T de l'étape d) est de l'ordre d'une heure.

12. Système de détermination de la résistance thermique (GV) d'un bâtiment comprenant :

    a) des moyens de mesure d'une température intérieure $\left(T_{int}^{mes}\right)$ du bâtiment,
    b) des moyens de mesure d'une température extérieure ($T_{ext}$) au bâtiment,
    c) des moyens de mesure d'une puissance de chauffage ($P_{mes}$) du bâtiment,
    d) des moyens de synchronisation des mesures acquises,
    e) des moyens pour estimer la résistance thermique (GV) du bâtiment à partir des mesures acquises, et

les moyens pour estimer la résistance thermique (GV) du bâtiment comprenant des moyens pour minimiser une fonctionnelle (J) sous contrainte de la relation physique entre la puissance de chauffage, la température extérieure et la température intérieure du bâtiment, relativement à la résistance thermique (GV) du bâtiment, le système étant **caractérisé en ce que** la minimisation de la fonctionnelle (J) se fait également relativement à une estimation $\left(T_{int}^{est}\right)$ de la température intérieure du bâtiment et à X scalaires $(a_i)_{i=1...X}$ constituant les paramètres d'un filtre d'ordre X à gain unitaire de la température extérieure ($T_{ext}$) au bâtiment, et **en ce qu'**il comprend des moyens pour fournir des données relatives à la valeur de la résistance thermique (GV) estimée.

**13.** Utilisation du procédé selon l'une des revendications 1 à 11 pour réguler la température intérieure d'un bâtiment au moyen d'un module de régulation de température.

**Patentansprüche**

**1.** Verfahren zum Bestimmen des Wärmewiderstands (GV) eines Gebäudes, die folgenden Schritte umfassend:

a) Messen einer Innentemperatur $(T_{int}^{mes})$ des Gebäudes anhand eines Sensors, der konfiguriert ist, um eine Innentemperatur $(T_{int}^{mes})$ des Gebäudes zu messen,

b) Messen einer Außentemperatur ($T_{ext}$) des Gebäudes anhand eines Sensors, der konfiguriert ist, um eine Temperatur außerhalb ($T_{ext}$) des Gebäudes zu messen,

c) Messen einer Heizleistung ($P_{mes}$) des Gebäudes anhand eines Sensors, der konfiguriert ist, um eine Heizleistung ($P_{mes}$) des Gebäudes zu messen,

d) Wiederholen der Schritte a), b), c) in einem Zeitabschnitt (P) über ein Gesamtzeitintervall (T),

e) Synchronisieren der Messungen der Schritte a), b), c) im selben Zeitabschnitt, um eine Einheit von $(T_{int}^{mes}(j), \ T_{ext}(j), \ P_{mes}(j))_{j=0...N}$ von N 3-Tupeln (wobei N gleich T geteilt durch P ist) von Werten der Innentemperatur des Gebäudes, der Temperatur außerhalb des Gebäudes und der Heizleistung des Gebäudes zu allen Messzeiten (j) der Schritte a), b) und c) zu erhalten,

f) Schätzen des Wärmewiderstands (GV) des Gebäudes,

wobei der Schritt f) einen Minimierungsschritt eines Funktionals (J) unter Last der physikalischen Beziehung zwischen der Heizleistung, der Außentemperatur und der Innentemperatur des Gebäudes in Bezug auf den Wärmewiderstand (GV) umfasst, **dadurch gekennzeichnet, dass** die Minimierung des Funktionals (J) auch in Bezug auf eine Schätzung $(T_{int}^{est})$ der Innentemperatur des Gebäudes und auf X Skalare $(a_1)_{i=1...X}$, die die Parameter eines Filters der X-ter Ordnung mit Einheitsverstärkung der Temperatur außerhalb ($T_{ext}$) des Gebäudes bildet, erfolgt, und dadurch, dass es weiter einen Schritt g) zum Bereitstellen von relativen Daten zu dem Wert des Wärmewiderstands (GV) des Gebäudes umfasst, der im Laufe des Schrittes f) geschätzt wird.

**2.** Verfahren nach Anspruch 1, wobei die Minimierung des Funktionals (J) auch in Bezug auf eine Repräsentativitäts- verzerrung $\delta T_{int}$ der Innentemperatur des Gebäudes erfolgt.

**3.** Verfahren nach einem der vorstehenden Ansprüche, wobei der Schritt a) gelichzeitig in M unterschiedlichen Zonen des Gebäudes durchgeführt wird, wobei M streng über 1 ist, wobei der Schritt e) es so ermöglicht, eine Einheit von N M+2-Tupeln an Werten der Innentemperatur des Gebäudes, der Temperatur außerhalb des Gebäudes und der Heizleistung des Gebäudes zu allen Messzeiten (j) der Schritte a), b) und c) zu erhalten, und wobei die Minimierung des Funktionals (J) auch unter Last eines Mittelwerts $(T_{int}^{moy})$ der jeweiligen M Innentemperaturen der M unterschiedlichen Zonen des Gebäudes erfolgt, die im Laufe des Schrittes a) gemessen werden, und in Bezug auf M relativen Koeffizienten $(v_i)_{i=1...M}$ zu den M im Laufe des Schrittes a) gemessenen Innentemperaturen bei der Be- rechnung des Mittelwerts $(T_{int}^{moy})$.

**4.** Verfahren nach einem der vorstehenden Ansprüche, wobei der Schritt c) weiter einen Schritt umfasst, der darin besteht, eine zweite Heizleistung $(P_{mes}^2)$ des Gebäudes zu messen, und wobei die Minimierung des Funktionals (J) auch unter Last der physikalischen Beziehung zwischen der zweiten Heizleistung, der Außentemperatur und der Innentemperatur des Gebäudes, und in Bezug auf einen zweiten Wärmewiderstand (GV$_2$) des Gebäudes, sowie zu einer Temperaturdifferenz ($\delta T^{est}$) erfolgt.

**5.** Verfahren nach einem der Ansprüche 1 bis 3, wobei der Schritt c) weiter einen Schritt umfasst, der darin besteht, mindestens eine andere Heizleistung des Gebäudes zu messen, und wobei die Minimierung der Funktionale (J) auch unter Last der physikalischen Beziehung zwischen der Summe verschiedener Heizleistungen, der Außentemperatur und der Innentemperatur des Gebäudes erfolgt.

6. Verfahren nach einem der vorstehenden Ansprüche, wobei der Schritt des Minimierens der Funktionale (J) durch Ausführen eines Quellcodes in einer IT-Umgebung einer interpretierbaren Sprache oder anhand eines unabhängigen ausführbaren Programms durchgeführt wird.

7. Verfahren nach einem der vorstehenden Ansprüche, wobei der Schritt g) anhand einer Kommunikationsschnittstelle mit einem Nutzer durchgeführt wird.

8. Verfahren nach einem der vorstehenden Ansprüche, wobei der Zeitabschnitt P des Schrittes d) zwischen 0 und 3 Tagen enthalten ist.

9. Verfahren nach einem der vorstehenden Ansprüche, wobei die Gesamtdauer T des Schrittes d) größer oder gleich 6 Monate ist, und wobei der Schritt d) mindestens eine Heizperiode des Gebäudes umfasst.

10. Verfahren nach einem der vorstehenden Ansprüche, wobei der Zeitabschnitt P des Schrittes d) zwischen 0 und 3 Minuten enthalten ist.

11. Verfahren nach einem der vorstehenden Ansprüche, wobei die Gesamtdauer T des Schrittes d) in der Größenordnung von einer Stunde ist.

12. System zum Bestimmen des Wärmewiderstands (GV) eines Gebäudes, Folgendes umfassend:

a) Mittel zum Messen einer Innentemperatur $(T_{int}^{mes})$ des Gebäudes,
b) Mittel zum Messen einer Temperatur außerhalb ($T_{ext}$) des Gebäudes,
c) Mittel zum Messen einer Heizleistung ($P_{mes}$) des Gebäudes,
d) Mittel zum Synchronisieren der erhobenen Messungen,
e) Mittel zum Schätzen des Wärmewiderstands (GV) des Gebäudes ausgehend von den erhobenen Messungen, und
wobei die Mittel zum Schätzen des Wärmewiderstands (GV) des Gebäudes Mittel zum Minimieren eines Funktionals (J) unter Last der physikalischen Beziehung zwischen der Heizleistung, der Außentemperatur und der Innentemperatur des Gebäudes in Bezug auf den Wärmewiderstand (GV) des Gebäudes umfasst, wobei das System **dadurch gekennzeichnet ist, dass** die Minimierung des Funktionals (J) auch in Bezug auf eine Schätzung $(T_{int}^{est})$ der Innentemperatur des Gebäudes und auf X Skalare ($a_1$)$_{i=1...X}$, die die Parameter eines Filters der X-ter Ordnung mit Einheitsverstärkung der Temperatur außerhalb ($T_{ext}$) des Gebäudes bildet, erfolgt, und dadurch, dass es Mittel zum Bereitstellen von relativen Daten zu dem Wert des geschätzten Wärmewiderstands (GV) des Gebäudes umfasst.

13. Verwendung des Verfahrens nach einem der Ansprüche 1 bis 11 zum Regeln der Innentemperatur eines Gebäudes anhand eines Temperaturregelungsmoduls.


**Claims**

1. Method for determining the thermal resistance (GV) of a building comprising the steps of:

a) measuring an inner temperature $(T_{int}^{mes})$ of the building by means of a sensor configured to measure an inner temperature $(T_{int}^{mes})$ of the building,
b) measuring an outer temperature ($T_{ext}$) to the building by means of a sensor configured to measure an outer temperature ($T_{ext}$) to the building,
c) measuring a heating power ($P_{mes}$) of the building by means of a sensor configured to measure a heating power ($P_{mes}$) of the building,
d) repeating steps a), b) and c) at a time step (P) over a total time (T) interval,

e) synchronising the measurements of steps a), b) and c) at the same time step so as to obtain a set

$(T_{int}^{mes}(j),\ T_{ext}(j),\ P_{mes}(j))_{j=0...N}$ of N triplets (N being equal to T divided by P) of inner temperature values of the building, of outer temperature to the building and of heating power of the building at all measurement times (j) of steps a), b) and c),

f) estimating the thermal resistance (GV) of the building,

step f) comprising a step of minimising a stressed function (J) of the physical relationship between the heating power, the outer temperature and the inner temperature of the building, relative to the thermal resistance (GV) of the building, **characterised in that** the minimisation of the function (J) is done also relative to an estimation $(T_{int}^{est})$ of the inner temperature of the building and to X scalars $(a_i)_{i=1...X}$ constituting the parameters of a filter of order X with a unit gain of the outer temperature ($T_{ext}$) to the building, and **in that** it further comprises a step g) of providing data relative to the value of the thermal resistance (GV) of the building estimated during step f).

2. Method according to claim 1, wherein the minimisation of the function (J) is also done relative to a conjunction fallacy $\delta T_{int}$ of the inner temperature of the building.

3. Method according to one of the preceding claims, wherein step a) is carried out simultaneously in M different zones of the building, M being strictly greater than 1, step e) thus making it possible to obtain a set of N M+2-uplets of inner temperature values of the building, of outer temperature to the building and of heating power of the building at all measurement times (j) of steps a), b) and c), and wherein the minimisation of the function (J) is also done under stress of an average $(T_{int}^{moy})$ of respective M inner temperatures of said M different zones of the building, measured during step a), and relative to M coefficients $(v_i)_{i=1...M}$ relative to M inner temperatures measured during step a) in calculating the average $(T_{int}^{moy})$.

4. Method according to one of the preceding claims, wherein step c) further comprises a step consisting in measuring a second heating power $(P_{mes}^2)$ of the building, and wherein the minimisation of the function (J) is also done under stress of the physical relationship between the second heating power, the outer temperature and the inner temperature of the building, and relative to a second thermal resistance ($GV_2$) of the building as well as to a temperature difference ($\delta T^{est}$).

5. Method according to one of claims 1 to 3, wherein step c) further comprises a step consisting in measuring at least one other heating power of the building, and wherein the minimisation of the function (J) is also done under stress of the physical relationship between the sum of different heating powers, the outer temperature and the inner temperature of the building.

6. Method according to one of the preceding claims, wherein the step of minimising the function (J) is carried out by executing a source code in a computerised environment of interpretable language or by means of an independent computer executable.

7. Method according to one of the preceding claims, wherein step g) is carried out by means of a communication interface with a user.

8. Method according to one of the preceding claims, wherein the time step P of step d) is comprised between 0 and 3 days.

9. Method according to one of the preceding claims, wherein the total duration T of step d) is greater than or equal to 6 months, and wherein step d) comprises at least one heating period of the building.

10. Method according to one of the preceding claims, wherein the time step P of step d) is comprised between 0 and 3 minutes.

11. Method according to one of the preceding claims, wherein the total duration T of step d) is of the order of one hour.

12. System for determining the thermal resistance (GV) of a building comprising:

a) means for measuring an inner temperature $(T_{int}^{mes})$ of the building,

b) means for measuring an outer temperature ($T_{ext}$) to the building,

c) means for measuring a heating power ($P_{mes}$) of the building,

d) means for synchronising the measurements acquired,

e) means for estimating the thermal resistance (GV) of the building from the measurements acquired, and the means for estimating the thermal resistance (GV) of the building comprising means for minimising the function (J) under stress of the physical relationship between the heating power, the outer temperature and the inner temperature of the building, relative to the thermal resistance (GV) of the building, the system being **characterised in that** the minimisation of the function (J) is also done relative to an estimation $(T_{int}^{est})$ of the inner temperature of the building and to X scalars $(a_i)_{i=1...X}$ constituting the parameters of a filter of order X with a unit gain of the outer temperature ($T_{ext}$) to the building, and **in that** it comprises means for providing data relative to the value of the estimated thermal resistance (GV).

13. Use of the method according to one of claims 1 to 11 to control the inner temperature of a building by means of a module for controlling the temperature.

# FIG. 1

Mesure d'une température intérieure ($T_{int}^{mes}$) du bâtiment — a

Mesure d'une température extérieure ($T_{ext}$) au bâtiment — b

Mesure d'une puissance de chauffage ($P_{mes}$) du bâtiment — c

j < N

j = N

Synchronisation des mesures ($T_{int}^{mes}$, $T_{ext}$, $P_{mes}$) — e

Estimation de la puissance thermique GV du bâtiment — f

Fourniture de données relatives à la résistance thermique GV du bâtiment — g

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3029306
- FR 3016037

- WO 2012028829 A